# FASCICULE DE BREVET EUROPEEN

(11) **EP 4 476 056 B1**
(45) Date de publication et mention de la délivrance du brevet: **24.12.2025**
(21) Numéro de dépôt: 23706418.3
(22) Date de dépôt: 01.02.2023
(51) Int. Cl.: B29C 70/24, B29C 70/48, B29B 11/16, D03D 25/00, D03D 1/00, C04B 35/80, B29C 70/44, B29L 31/00

(54) **PROCEDE DE FABRICATION D'UNE PLATEFORME INTER-AUBES AVEC BORDS SACRIFICIELS**
VERFAHREN ZUR HERSTELLUNG EINER ZWISCHENSCHAUFELPLATTFORM MIT OPFERKANTEN
METHOD FOR MANUFACTURING AN INTER-BLADE PLATFORM WITH SACRIFICIAL EDGES

(30) Priorité: 10.02.2022 FR 2201162
(43) Date de publication de la demande: 18.12.2024
(73) Titulaire: SAFRAN AIRCRAFT ENGINES, 75015 Paris (FR)
(72) Inventeur: OUTTRABADY, Henri, 77550 Moissy-Cramayel (FR); COMMARMOT, Manon, 77550 Moissy-Cramayel (FR); GALVE, Antoine, 77550 Moissy-Cramayel (FR); MOUNIEN, Richard, Anandavelou, 77550 Moissy-Cramayel (FR)
(74) Mandataire: Cabinet Beau de Loménie
(86) Numéro de dépôt international: PCT/FR2023/050128
(87) Numéro de publication internationale: WO 2023/152436

(56) Documents cités:
- CA-A1- 2 971 426
- FR-A1- 3 047 744
- FR-A1- 3 097 904
- US-A1- 2014 334 935

## Description

### Domaine Technique

L'invention concerne une soufflante de turbomachine, par exemple de turboréacteur ou de turbopropulseur d'avion, et en particulier les plateformes inter-aubes dans les soufflantes des turbomachines.

### Technique antérieure

De façon connue, une soufflante de turbomachine comprend un disque de rotor comportant une pluralité d'aubes, séparées à leurs extrémités radialement internes par des plateformes inter-aubes. Ainsi, les plateformes inter-aubes de soufflante de turbomachine sont disposées entre les aubes de la soufflante dans le prolongement du cône d'entrée de celle-ci. Elles permettent notamment de délimiter, du côté intérieur, la veine annulaire d'entrée d'air dans la soufflante, cette veine étant délimitée du côté extérieur par un carter. Ces plateformes comprennent généralement une base, configurée pour délimiter la veine, et des pattes s'étendant radialement vers le disque de rotor. Ces pattes peuvent faire partie d'un caisson, ou correspondre à des raidisseurs.

Comme les aubes ne sont pas liées aux plateformes, les contraintes mécaniques auxquelles sont soumis les pieds d'aube en fonctionnement sont fortement réduites. Il est alors possible de diminuer la taille des pieds d'aube pour alléger la soufflante et augmenter ainsi les performances de la turbomachine.

La base des plateformes comprend généralement des bords latéraux sacrificiels, conçus pour se rompre en cas d'une pression forte d'une aube sur lesdits bords sacrificiels. Ces bords latéraux sacrificiels ont typiquement une épaisseur inférieure au reste de la base. Ainsi, en cas de perte d'une aube de soufflante, les bords sacrificiels des deux plateformes situés de part et d'autre de ladite aube cèdent, permettant de dissiper une partie de l'énergie et de diminuer les efforts de contact entre l'aube et la plateforme afin de limiter les dommages structurels. En outre, les deux plateformes permettent de protéger les aubes de soufflante environnantes en empêchant les éventuels débris de l'aube perdue de venir au contact des extrémités radialement internes de ces aubes. Par conséquent, on réduit fortement les risques d'endommagement supplémentaire des aubes et des plateformes de la soufflante.

Les plateformes de soufflante sont classiquement réalisées en matériau composite, et comprennent un renfort fibreux densifié par une matrice. Il est notamment connu de réaliser l'ébauche fibreuse en une seule pièce par tissage tridimensionnel ou multicouches. La réalisation par tissage tridimensionnel d'une ébauche fibreuse en forme de n (Pi) pour plateforme est par exemple décrite dans le document WO 2013/088040. Puis, la préforme fibreuse est densifiée par une matrice selon les moyens habituels.

Les bords latéraux sacrificiels sont ensuite réalisés par usinage des bords de la base afin d'obtenir la diminution d'épaisseur souhaitée. Toutefois, cette opération d'usinage du matériau composite est complexe et délicate à mettre en œuvre, notamment pour le respect des cotations dimensionnelles de la pièce et du raccord des surfaces.

Le document FR 3 097 904 A1 propose la fabrication d'une plateforme en matériau composite avec des extrémités libres sacrificielles par usinage du matériau composite, comme décrit précédemment, ou par l'utilisation de déliaisons. Le document US 2014/334935 A1 divulgue la fabrication d'une structure fibreuse avec une portion d'épaisseur réduite.

### Exposé de l'invention

La présente invention a donc pour but principal de remédier aux inconvénients précités en facilitant la fabrication des plateformes inter-aubes.

A cet effet, l'invention propose un procédé de fabrication d'une plateforme inter-aubes d'une soufflante de turbomachine, suivant les caractéristiques de la revendication 1.

Ainsi, on simplifie la fabrication des plateformes inter-aubes en densifiant une préforme fibreuse présentant déjà une forme sensiblement identique à la pièce à fabriquer. On s'affranchit par conséquent d'une étape d'usinage complexe, limitant ainsi également les pertes de matière, tout en assurant un respect des cotations dimensionnelles.

Selon une caractéristique particulière de l'invention, la densification de la préforme fibreuse est réalisée en disposant la préforme fibreuse dans la chambre d'imprégnation d'un moule comprenant une face inférieure, en faisant reposer sur ladite face inférieure la surface de la préforme fibreuse destinée à former la première surface de la partie centrale de la base de la plateforme, la chambre d'imprégnation étant fermée par une membrane souple séparant ladite chambre d'imprégnation d'une chambre de compaction, un fluide d'imprégnation étant injecté dans la chambre d'imprégnation et un fluide de compression étant injecté dans la chambre de compaction de manière à appliquer une pression sur la membrane.

Le fluide d'imprégnation peut par exemple être une barbotine comprenant des particules de précurseur de matrice, ou une résine.

Les techniques d'injection sous membrane permettent une plus grande souplesse pour la géométrie du moule d'injection. En effet, l'utilisation d'une membrane souple plutôt que d'un contre-moule rigide, comme c'est le cas dans les techniques de RTM, permet notamment de s'adapter plus facilement à la géométrie particulière des pattes. En outre, les techniques d'injection sous membrane permettent également une meilleure maîtrise du taux volumique de fibres, puisqu'on introduit exactement le volume de résine souhaité pour obtenir un taux volumique de fibres précis et prédéfini.

Selon une autre caractéristique particulière de l'invention, l'injection du fluide d'imprégnation est réalisée avant l'injection du fluide de compression.

Selon une autre caractéristique particulière de l'invention, l'injection du fluide d'imprégnation est terminée avant l'injection du fluide de compression.

Dans cette variante, on obtient une maîtrise accrue de l'écoulement du fluide d'imprégnation, et par conséquent de l'imprégnation de la préforme fibreuse.

Selon une autre caractéristique particulière de l'invention, l'injection du liquide de compaction débute avant l'injection du fluide d'imprégnation.

Cette dernière variante permet avantageusement d'appliquer une pression sur les préformes fibreuses dont la valeur permet d'obtenir le taux volumique de fibre souhaité avant même que le fluide d'imprégnation ne soit injecté. On débute ensuite l'injection du fluide d'imprégnation, qui peut être réalisée alors que l'on continue à injecter du fluide de compression afin de compenser les pertes de charges, particulièrement dans le cas où le fluide d'imprégnation est une barbotine.

### Brève description des dessins

[Fig. 1] La figure 1 est une vue schématique éclatée partielle d'un exemple de soufflante comprenant des plateformes inter-aubes.
[Fig. 2] La figure 2 est une vue en coupe de la plateforme inter-aubes représentée sur la figure 1.
[Fig. 3] La figure 3 est une vue schématique partielle d'un plan d'une ébauche fibreuse de la plateforme réalisée par tissage tridimensionnel.
[Fig. 4] La figure 4 est une vue schématique partielle d'un plan d'une préforme fibreuse obtenue par mise en forme de l'ébauche fibreuse de la figure 3.
[Fig. 5] La figure 5 est une vue schématique en coupe de la préforme fibreuse de la plateforme dans un outillage d'injection rigide.
[Fig. 6] La figure 6 est une vue schématique en coupe de la préforme fibreuse de la plateforme dans un outillage comprenant une membrane souple.

### Description des modes de réalisation

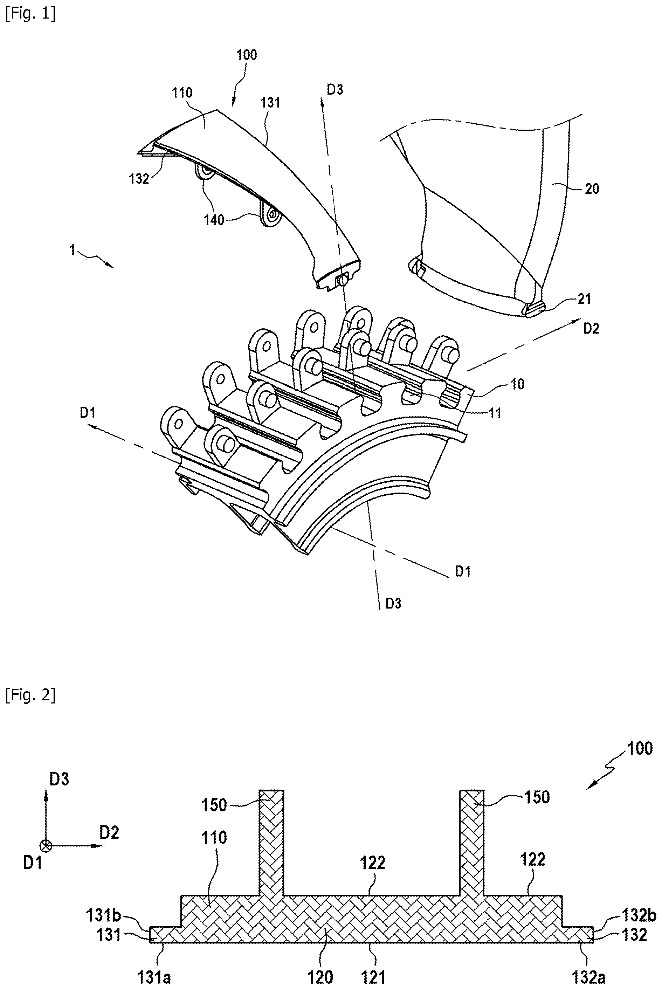

La figure 1 illustre une soufflante de turbomachine 1 en vue éclatée comprenant un disque de rotor 10 portant une pluralité d'aubes de soufflante 20, les pieds 21 des aubes 20 étant engagés dans des rainures axiales 11 formées dans le disque de rotor 10. Les aubes 20 sont séparées par des plateformes inter-aubes 100 fixées sur le disque de rotor 10.

On définit une première direction D₁ qui correspond au sens général d'écoulement des gaz de la turbomachine. On définit également une deuxième direction D₂ tangentielle et/ou circonférentielle, qui correspond à la direction de succession alternée des plateformes inter-aubes 100 et des aubes. Enfin, on définit une troisième direction D₃ radiale perpendiculaire à la première direction.

Pour des raisons de simplification, les première, deuxième et troisième directions du repère de la soufflante sont également utilisées pour le repère de la plateforme, les directions du repère de la plateforme correspondant aux directions du repère de la soufflante lorsque ladite plateforme est montée sur ladite soufflante.

La plateforme inter-aubes 100 illustrée sur les figures 1 et 2 comprend une base 110, comprenant une partie centrale 120 ainsi qu'un premier bord latéral sacrificiel 131 et un deuxième bord latéral sacrificiel 132. La partie centrale 120 de la base 110 présente une première surface 121 et une deuxième surface 122 opposées. La première surface 121 est destinée à délimiter une veine d'écoulement de la soufflante. Lorsque la plateforme 100 est montée sur la soufflante, la première surface 121 et la deuxième surface 122 s'étendent en longueur selon la première direction D₁, c'est-à-dire dans le sens général de l'écoulement du gaz de la turbomachine, et s'étendent en largeur selon la deuxième direction D₂ entre les deux aubes adjacentes encadrant la plateforme 100.

La plateforme 100 comprend en outre au moins deux pattes 150 s'étendant radialement depuis la deuxième surface 122 de la partie centrale 120 de la base 110 et pouvant remplir une fonction de raidisseur. Lorsque la plateforme 100 est montée sur la soufflante, les pattes 150 s'étendent selon la troisième direction D₃, vers le disque de rotor. Les pattes 150 s'étendent également dans la longueur de la première surface 121 et de la deuxième surface 122. Ainsi, lorsque la plateforme 100 est montée sur la soufflante, les pattes 150 s'étendent selon la première direction D₁, c'est-à-dire dans le sens général de l'écoulement du gaz de la turbomachine.

Le premier bord latéral sacrificiel 131 et le deuxième bord latéral sacrificiel 132 s'étendent de part et d'autre de la partie centrale 120 de la base 110 de la plateforme 100, dans la longueur de la première surface 121 et de la deuxième surface 122. Le premier bord latéral sacrificiel 131 et le deuxième bord latéral sacrificiel 132 sont donc joints à la partie centrale 120 de la base 110 de la plateforme 100.

De préférence, le premier bord sacrificiel 131 et le deuxième bord sacrificiel 132 comprennent chacun respectivement une surface de prolongement 131a et 132a située dans le prolongement de la première surface 121 de la partie centrale 120 selon la deuxième direction D₂. De préférence, la longueur de la surface de prolongement 131a, 132a selon la deuxième direction D₂ est comprise entre 6 mm et 11 mm.

Le premier bord sacrificiel 131 et le deuxième bord sacrificiel 132 présentent une épaisseur selon la troisième direction D₃ inférieure à l'épaisseur de la partie centrale 120 de la base 110 selon la troisième direction D₃. De préférence, l'épaisseur des premier et deuxième bords sacrificiels 131 et 132 est comprise entre 1,5 mm et 2,2 mm.

De préférence, l'épaisseur selon la troisième direction D₃ des premier et deuxième bords sacrificiels 131, 132 à leur extrémité libre 131b, 132b est inférieure ou égale à 2,2 mm.

La fabrication de la plateforme inter-aubes 100 comprend la réalisation d'une préforme fibreuse 200 de la plateforme 100 par tissage tridimensionnel entre une pluralité de couches de fils de chaîne et une pluralité de couches de fils de trame. Par « tissage tridimensionnel » ou « tissage 3D », on entend ici un mode de tissage par lequel certains au moins des fils de chaîne lient des fils de trame sur plusieurs couches de trame. Une inversion des rôles entre chaîne et trame est possible. La préforme fibreuse peut, par exemple, présenter une armure multi-satin, c'est-à-dire un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles.

La préforme fibreuse peut également, par exemple, présenter une armure interlock, c'est-à-dire un tissu obtenu par tissage tridimensionnel dans lequel chaque couche de fils de chaîne lie plusieurs couches de fils de trame avec tous les fils de la même colonne de chaîne ayant le même mouvement dans le plan de l'armure.

D'autres modes de tissage tridimensionnel sont envisageables, tel que par exemple des tissages à armure multi-toile. Différents modes de tissage multicouches utilisables pour former la préforme fibreuse sont décrits dans le document WO 2006/136755.

La préforme fibreuse 200 comprend des portions de pattes 250 destinées à former le renfort fibreux des pattes 150 de la plateforme 100, et une portion de base 210 destinée à former le renfort fibreux de la base 110 de la plateforme 100. En particulier, la portion de base 210 de la préforme fibreuse 200 comprend une portion de partie centrale 220 destinée à former le renfort fibreux de la partie centrale 120 de la base 110 de la plateforme 100, ainsi qu'une première portion et une deuxième portion de bords latéraux sacrificiels 231 et 232 destinées à former respectivement le renfort fibreux du premier et du deuxième bords latéraux sacrificiels 131 et 132. La portion de partie centrale 220 comprend une première surface 221 et une deuxième surface 222, respectivement destinée à former la première surface 121 et la deuxième surface 122 de la partie centrale 120 de la base 110 de la plateforme 100.

Afin de réaliser une préforme fibreuse 200 de la plateforme 100, on peut commencer par réaliser une ébauche fibreuse 300 de ladite plateforme 100 par tissage tridimensionnel.

Les portions de bords sacrificiels 231 et 232 sont réalisées selon la méthode dite de « sortie de couche ». Une ébauche fibreuse 300 de la préforme fibreuse 200 est réalisée au moyen d'un métier à tisser de type jacquard. Un tel métier à tisser est par exemple décrit dans le document FR 3 047 744 A1. Au moyen d'un tel métier à tisser, il est possible de tisser directement les ébauches des portions de bords sacrificiels dont l'épaisseur est différente de l'ébauche de la portion de partie centrale.

Ainsi, dans l'ébauche fibreuse 300, une première pluralité de couches de fils de trame est continue entre l'ébauche de la portion de partie centrale et les deux ébauches des portions de bords latéraux sacrificiels, c'est-à-dire qu'une première pluralité de fils de trame traverse à la fois l'ébauche de la portion de partie centrale et les deux ébauches des portions de bords latéraux sacrificiels. Par conséquent, dans la préforme fibreuse 200, la première pluralité de couches de fils de trame est continue entre la portion de partie centrale 220 et les deux portions de bords latéraux sacrificiels 231 et 232, c'est-à-dire que la première pluralité de fils de trame traverse à la fois la portion de partie centrale 220 et les deux portions de bords latéraux sacrificiels 231 et 232.

L'ébauche de portion de partie centrale comprend une pluralité de couches de fils de chaîne qui est tissée avec une pluralité de couches de fils de trame. En particulier, la pluralité de couches de fils de chaîne est tissée avec la première pluralité de couches de fils de trame et avec une deuxième pluralité de couches de fils de trame, c'est-à-dire que les fils de chaîne appartenant à l'ébauche de portion de partie centrale sont tissés avec la première pluralité de fils de trame et avec une deuxième pluralité de fils de trame. Par conséquent, dans la préforme fibreuse 200, la pluralité de couches de fils de chaîne est tissée avec la première pluralité de couches de fils de trame et avec la deuxième pluralité de couches de fils de trame, c'est-à-dire que les fils de chaîne appartenant à la portion de partie centrale 220 sont tissés avec la première pluralité de fils de trame et avec la deuxième pluralité de fils de trame.

L'ébauche de portion de bord latéral sacrificiel comprend une première pluralité de couches de fils de chaîne qui est tissée avec la première pluralité de couches de fils de trame, c'est-à-dire qu'une première pluralité de fils de chaîne est tissée avec la première pluralité de fils de trame au sein de l'ébauche de portion de bord latéral sacrificiel. La même structure de tissage est utilisée pour l'autre ébauche de portion de bord latéral sacrificiel. Par conséquent, dans la préforme fibreuse 200, la portion de bord latéral sacrificiel 232 comprend la première pluralité de couches de fils de chaîne qui est tissée avec la première pluralité de couches de fils de trame, c'est-à-dire que la première pluralité de fils de chaîne est tissée avec la première pluralité de fils de trame au sein de la portion de bord latéral sacrificiel 232. La même structure de tissage est utilisée pour l'autre portion de bord latéral sacrificiel 231.

La différence d'épaisseur entre l'ébauche de la portion de partie centrale et les deux ébauches des portions bords latéraux sacrificiels est réalisée en retirant une deuxième pluralité de fils de chaîne située de part et d'autre de l'ébauche de la portion de partie centrale et distincte de la première pluralité de fils de chaîne. En particulier, un fil de chaîne appartenant à la deuxième pluralité de fils de chaîne ne peut appartenir à la première pluralité de fils de chaîne, et inversement. Ainsi, la deuxième pluralité de fils de chaîne correspond à l'ensemble des fils de chaîne situés en dehors de l'ébauche de portion de partie centrale et n'étant pas tissés à la première pluralité de fils de trame.

Afin de permettre le retrait de la deuxième pluralité de fils de chaîne, la deuxième pluralité de fils de chaîne n'est pas tissée avec des fils de trame. Ainsi, la deuxième pluralité de fils de chaîne n'est pas tissée avec la première pluralité de fils de trame et n'est pas tissée avec la deuxième pluralité de fils de trame.

Ainsi, la deuxième pluralité de fils de trame est tissée uniquement avec les fils de chaîne présents dans l'ébauche de portion de partie centrale. Par conséquent, dans la préforme fibreuse 200, la deuxième pluralité de fils de trame est tissée uniquement avec les fils de chaîne présents dans la portion de partie centrale 220.

La deuxième pluralité de fils de trame correspond donc aux fils de trame qui ne sont pas tissés avec la première pluralité de fils de chaîne.

Lorsque le tissage de l'ébauche fibreuse 300 est terminé, on découpe les deux portions des fils appartenant à la deuxième pluralité de fils de trame n'étant pas tissées avec l'ébauche de portion de partie centrale.

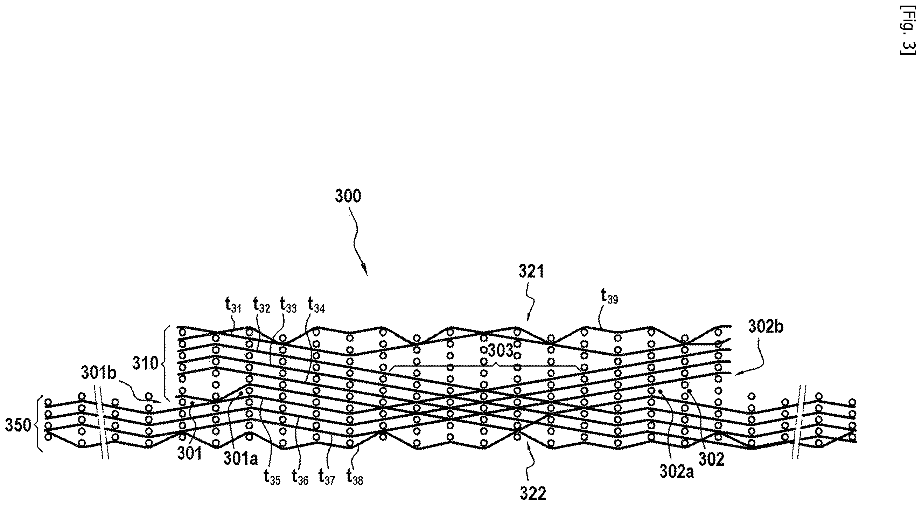

En parallèle de la réalisation des portions de bords latéraux 231 et 232, les portions de pattes 250 de la préforme fibreuse 200 peuvent réalisées par le biais de déliaisons. La figure 3 montre un exemple de plan schématique partiel de l'ébauche fibreuse 300 de la plateforme 100 comprenant dans son épaisseur une ébauche de portion de base 310 et une ébauche de portion de pattes 350 séparées l'une de l'autre sur une partie de la dimension de l'ébauche fibreuse 300 en direction trame par une première déliaison 301 et une deuxième déliaison 302. Les déliaisons 301 et 302 s'étendent depuis des bords opposés 301b, 302b de l'ébauche fibreuse 300 jusqu'à des fonds de déliaison 301a, 302a, le centre de l'ébauche fibreuse 300 étant sans déliaison. L'ébauche de portion de base 310 présente une première surface 321 et une deuxième surface 322, destinées respectivement à former la première surface 221 et la deuxième surface 222 de la portion de partie centrale 220 de la préforme fibreuse 220.

Chaque ébauche de portion de base 310 ou de pattes 350 de l'ébauche fibreuse 300 comporte une pluralité de couches de fils de chaîne, les nombres de couches de fils de chaîne dans les ébauches de portion de base 310 et de pattes 350 étant ici différents.

Dans chaque plan de l'ébauche fibreuse 300, des mêmes premiers fils de trame t₃₁, t₃₂, t₃₃, t₃₄ lient entre eux des fils de chaîne dans l'ébauche de portion de pattes 350 au-delà de la deuxième déliaison 302 ainsi que des fils de chaîne dans la partie de l'ébauche de la portion de base 310 bordant la première déliaison 301. A l'inverse, des mêmes deuxièmes fils de trame t₃₅, t₃₆, t₃₇, t₃₈ lient entre eux des fils de chaîne dans la partie de l'ébauche de portion de base 310 bordant la deuxième déliaison 302 et des fils de chaînes dans l'ébauche de portion de pattes 350 en deçà de la première déliaison 301.

Ainsi, les trajets des premiers fils de trame t₃₁, t₃₂, t₃₃, t₃₄ croisent ceux des deuxièmes fils de trame t₃₅, t₃₆, t₃₇, t₃₈ dans une zone de transition 303 située au centre de l'ébauche fibreuse 300, entre les fonds 301a et 302a des déliaisons 301 et 302.

On note, au niveau de la première surface 321 de l'ébauche de portion de base 310, un tissage avec armure satin de surface représenté par le fil t₃₉ assurant une continuité de surface sans traversée de couches de fils de chaîne et sans croisement avec un autre fil de trame.

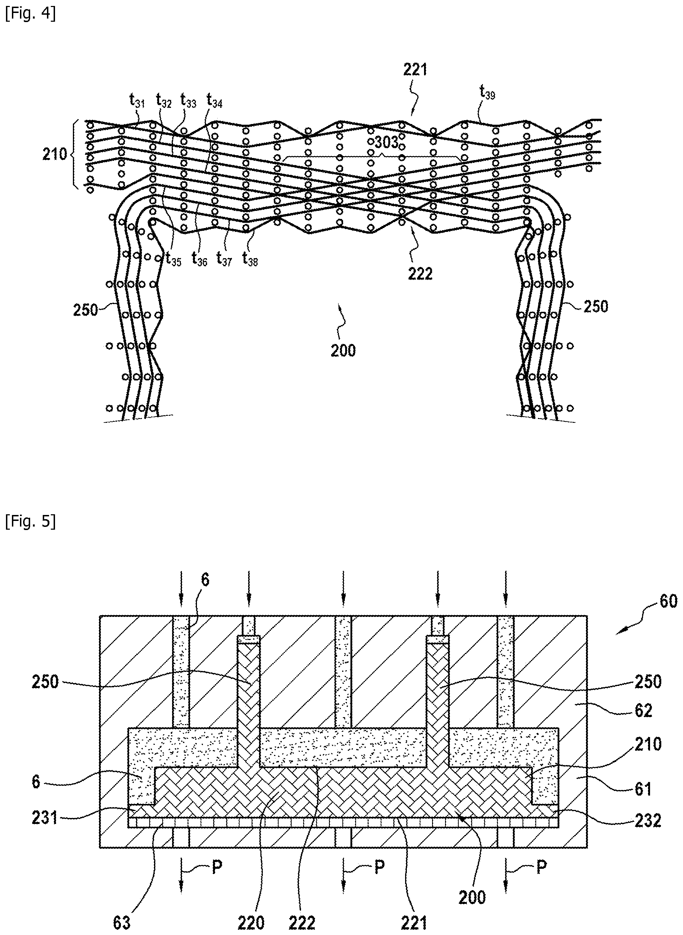

Les tissages représentés sur les figures 3 et 4 sont des schémas de principe, et représentent donc un nombre de fils de chaîne et un nombre de fils de trame inférieurs aux nombres réels de fils de chaîne et de fils de trame.

L'ébauche fibreuse 300 de la plateforme 100 est ensuite mise en forme comme illustré sur la figure 4 pour obtenir une préforme fibreuse 200 du corps 100 à section sensiblement en forme de n (Pi), en pliant l'ébauche de portion de pattes 350 au niveau des déliaisons 301 et 302 de sorte à former les portions de pattes 250.

De préférence, la longueur et la largeur de la première surface 221 de la portion de partie centrale 220, la longueur des portions de pattes 250 et l'espacement entre les deux portions de pattes 250 correspondent sensiblement respectivement à la longueur et à la largeur de la première surface de la partie centrale 120, à la longueur des pattes 130 et à l'espacement entre les deux pattes 130 de la plateforme 100.

Le document WO 2013/088040 décrit notamment des exemples de plan d'ébauches fibreuses pouvant être utilisés pour réaliser une préforme fibreuse de plateforme présentant des pattes.

De préférence, la préforme fibreuse 200 correspond à une texture fibreuse « sèche », c'est-à-dire non imprégnée par une résine ou assimilé. La préforme fibreuse 200 peut comporter une pluralité de fils de diverses natures, en particulier des fils en céramique ou en carbone ou encore un mélange de tels fils. De préférence, la préforme fibreuse 200 peut être réalisée à partir de fibres en carbure de silicium. De manière générale, la préforme fibreuse 200 peut également être réalisées à partir de fibres constituées des matériaux suivants : l'alumine, la mullite, la silice, un aluminosilicate, un borosilicate, du carbone, ou un mélange de plusieurs de ces matériaux.

Une fois la préforme fibreuse 200 de la plateforme 100 obtenue, ladite préforme fibreuse 200 est densifiée par une matrice, afin de former une pièce comprenant un renfort fibreux constitué par la préforme fibreuse 200.

La densification peut être réalisée de manière bien connue par moulage par injection de résine, ou « Resin Transfer Molding » (en abrégé « RTM ») en langue anglaise, ou par moulage par injection d'une suspension, ou « Slurry Transfer Molding » (en abrégé « STM ») en langue anglaise. Comme illustré sur la figure 5, la préforme fibreuse 200 destinée à former le renfort fibreux de la plateforme 100 est disposée dans une cavité définie par une première partie 61 et une deuxième partie 62 d'un moule 60. La cavité a la forme de la pièce à fabriquer, cette dernière présentant au moins globalement la forme de la plateforme 100 à fabriquer.

De manière classique, une barbotine 6 chargée de particules de précurseurs de matrice ou une résine est injectée dans la cavité accueillant la préforme fibreuse 200, afin de traverser ladite préforme fibreuse 200 grâce à l'application d'un gradient de pression P. Le moule 6 dans lequel l'injection de la barbotine 6 est effectuée comprend un filtre 63 au niveau de l'orifice de sortie de la barbotine 6 dans le moule 60, permettant ainsi de retenir les éventuelles particules de précurseur de matrice dans le moule 60 et d'imprégner la préforme fibreuse 200 au fur et à mesure du dépôt des particules de précurseurs de matrice dans le moule 60 dans le cas d'une barbotine.

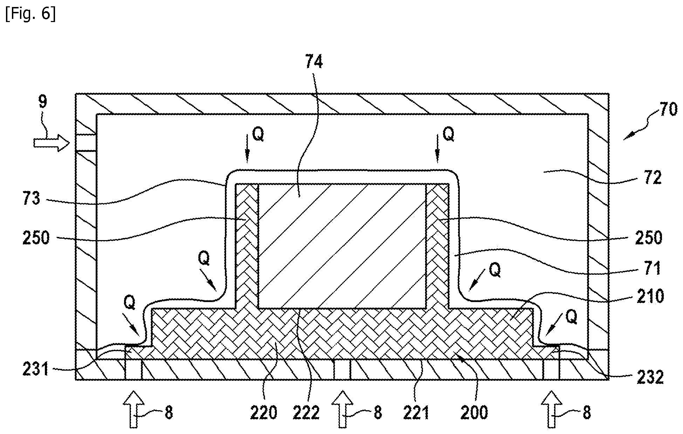

La densification peut également être réalisée de manière bien connue par injection sous membrane, comme illustré sur la figure 6. Ce mode d'injection permet une maîtrise complète de la quantité de résine ou de barbotine injectée, assurant ainsi un taux volumique de fibres précis et adaptée. Par conséquent, les caractéristiques mécaniques de la pièce ainsi fabriquée sont améliorées, avec une faible variabilité d'une pièce à l'autre.

La préforme fibreuse 200 destinée à former le renfort fibreux de la plateforme 100 est disposée dans un moule 70. En particulier, la préforme fibreuse 200 peut être disposée directement sur la face inférieure de la chambre d'imprégnation 71. Cette face inférieure de la chambre d'imprégnation 71 peut comprendre un filtre (non représenté sur la figure 6).

Le moule 70 comprend d'une part une chambre d'imprégnation 71 dans laquelle est disposée la préforme fibreuse 200 afin d'être densifiée par une matrice par l'injection d'un fluide d'imprégnation 8, et d'autre part une chambre de compaction 72 dans laquelle un fluide de compression 9 est injecté afin d'appliquer une pression sur la préforme 200 durant sa densification par la matrice. La chambre d'imprégnation 71 et la chambre de compaction 72 sont séparées par une membrane souple 73. La membrane 73 permet d'appliquer la pression sur la préforme fibreuse 200 installée dans la chambre d'imprégnation 71, le fluide de compression 9 appliquant une pression Q sur la membrane 73 qui se déforme et applique ainsi à son tour une pression sur la préforme fibreuse 200.

De préférence, et comme illustré sur la figure 6, la membrane vient épouser les portions de pattes 250 de la préforme fibreuse 200 et la deuxième surface 222 de la portion de partie centrale 220, tandis que la première surface 221 de la portion de partie centrale 220 repose contre l'une des parois de la chambre d'imprégnation 71, opposée à la membrane 73. Un insert 74 peut être utilisé pour faciliter l'imprégnation de la préforme fibreuse 200 de la plateforme 100.

La membrane souple 73 est par exemple réalisée en silicone.

Comme représenté sur la figure 6, on peut par exemple injecter une résine 8 au travers d'un orifice d'entrée débouchant dans la chambre d'imprégnation 71, et injecter le liquide de compression 9 par un orifice d'entrée débouchant dans la chambre de compaction 72.

Selon la taille, l'épaisseur et la forme de la plateforme 100 à fabriquer, on privilégiera une séquence d'injection des fluides de compression et d'imprégnation différente.

Par exemple, on peut commencer par injecter le fluide d'imprégnation, par exemple une résine, dans la chambre d'imprégnation où sont disposées les préformes fibreuses. Une fois l'injection du fluide d'imprégnation terminée, on injecte le fluide de compression, par exemple de l'eau, dans la chambre de compaction de sorte à exercer une pression sur la membrane souple. La membrane souple applique ainsi une pression sur la préforme fibreuse, permettant de faire pénétrer le fluide d'imprégnation dans ladite préforme.

La préforme est ensuite soumise à un traitement thermique alors que la pression exercée par la membrane est maintenue, afin de former une matrice dans les porosités de la préforme fibreuse.

Selon un autre exemple, on peut commencer par injecter le fluide de compression dans la chambre de compaction. Ainsi, avant même l'injection du fluide d'imprégnation, on applique déjà par le biais de la membrane souple une pression sur la préforme fibreuse dont la valeur permet d'obtenir le taux volumique de fibre souhaité. On débute ensuite l'injection du fluide d'imprégnation, qui peut être réalisée alors que l'on continue à injecter du fluide de compression afin de compenser les pertes de charges, particulièrement dans le cas où le fluide d'imprégnation est une barbotine. Une telle séquence d'injection est par exemple décrite dans le document WO 2019/197757 A1.

Lorsque l'étape de densification est terminée, on obtient une pièce en matériau composite dont le renfort fibreux est constitué par la préforme fibreuse 200, et dont la forme correspond globalement à la plateforme inter-aubes 100 à fabriquer. Une étape de détourage ou d'usinage léger peut être effectuée sur la pièce réalisée pour obtenir la plateforme inter-aubes 100 à fabriquer. En outre, d'autres éléments peuvent être montés ou soudés sur la pièce réalisée pour obtenir la plateforme inter-aubes 100 à fabriquer, notamment des éléments d'attaches 140 au disque de rotor comme représenté sur la figure 1.

L'expression « compris(e) entre ... et ... » doit se comprend comme incluant les bornes.

## Revendications

1. Procédé de fabrication d'une plateforme inter-aubes (100) d'une soufflante de turbomachine (1), ladite plateforme (100) comportant une base (110) et au moins deux pattes (150), la base (110) comprenant une partie centrale (120) comprenant une première surface (121) configurée pour délimiter une veine d'écoulement de la soufflante et une deuxième surface (122), opposée à la première surface (121), depuis laquelle s'étendent radialement lesdites au moins deux pattes (150), la base (110) comprenant en outre un premier et un deuxième bords latéraux sacrificiels (131, 132) s'étendant de part et d'autre de la partie centrale (120) de la base (110) et présentant une épaisseur inférieure à celle de la partie centrale (120) de la base (110),
le procédé comprenant la réalisation d'une préforme fibreuse (200) de la plateforme (100) par tissage tridimensionnel en une seule pièce entre une pluralité de couches de fils de trame et une pluralité de couches de fils de chaîne,
le procédé comprenant en outre la densification de la préforme fibreuse (200) par une matrice pour former une pièce ayant la forme de la plateforme (100) à fabriquer,
la préforme fibreuse (200) de la plateforme (100) comprenant une portion de base (210) destinée à former le renfort fibreux de la base (110) de la plateforme (100), ladite portion de base (210) de la préforme fibreuse (200) comprenant une portion de partie centrale (220) et deux portions de bords sacrificiels (231, 232) dont l'épaisseur est inférieure à celle de la portion de partie centrale (220), les fils de chaîne appartenant à la portion de partie centrale (220) étant tissés avec une première pluralité de fils de trame et avec une deuxième pluralité de fils de trame,
le procédé étant **caractérisé en ce que** la première pluralité de fils de trame est continue entre la portion de partie centrale (220) et les portions de bords sacrificiels (231, 232), les portions de bords sacrificiels (231, 232) comprenant une première pluralité de fils de chaîne tissée à la première pluralité de fils de trame,
la différence d'épaisseur entre les portions de bords latéraux (231, 232) et la portion de partie centrale (220) étant réalisée par retrait d'une deuxième pluralité de fils de chaîne située en dehors de la portion de partie centrale (220) et n'étant pas tissée avec des fils de trame de la pluralité de couches de fils de trame, la deuxième pluralité de fils de chaîne n'étant pas tissée avec la première pluralité de fils de trame et n'étant pas tissée avec la deuxième pluralité de fils de trame, et **en ce que** les deux portions de fils appartenant à la deuxième pluralité de fils de trame n'étant pas tissées avec la portion de partie centrale (220) sont découpées lorsque le tissage de la préforme fibreuse (200) est terminé.

2. Procédé de fabrication selon la revendication 1, dans lequel la densification de la préforme fibreuse (200) est réalisée en disposant la préforme fibreuse (200) dans la chambre d'imprégnation (71) d'un moule (70) comprenant une face inférieure, en faisant reposer sur ladite face inférieure la surface (221) de la préforme fibreuse (200) destinée à former la première surface (121) de la partie centrale (120) de la base (110) de la plateforme (100), la chambre d'imprégnation (71) étant fermée par une membrane souple (73) séparant ladite chambre d'imprégnation (71) d'une chambre de compaction (72), un fluide d'imprégnation (8) étant injecté dans la chambre d'imprégnation (71) et un fluide de compression (9) étant injecté dans la chambre de compaction (72) de manière à appliquer une pression (Q) sur la membrane (73).

3. Procédé selon la revendication 2, dans lequel l'injection du fluide d'imprégnation (8) débute avant l'injection du fluide de compression (9).

4. Procédé selon la revendication 2, dans lequel l'injection du fluide de compression (9) débute avant l'injection du fluide d'imprégnation (8).

## Patentansprüche

1. Verfahren zur Herstellung einer Zwischenschaufel-Plattform (100) eines Gebläses einer Turbomaschine (1), wobei die Plattform (100) eine Basis (110) und zumindest zwei Laschen (150) beinhaltet, wobei die Basis (110) einen zentralen Teil (120) umfasst, der eine erste Oberfläche (121) umfasst, die dazu ausgestaltet ist, einen Strömungsgang des Gebläses zu begrenzen, und eine zweite, der ersten Oberfläche (121) entgegengesetzte Oberfläche (122), von welcher aus sich die zumindest zwei Laschen (150) radial weg erstrecken, wobei die Basis (110) ferner eine erste und eine zweite Opfer-Seitenkante (131, 132) umfasst, die sich auf beiden Seiten des zentralen Teils (120) der Basis (110) erstrecken und eine Dicke aufweisen, die geringer als der zentrale Teil (120) der Basis (110) ist,
wobei das Verfahren die Verwirklichung einer Faservorform (200) der Plattform (100) durch dreidimensionales Verweben in einem Stück zwischen mehreren Schichten von Schussfäden und mehreren Schichten von Kettfäden umfasst,
wobei das Verfahren ferner die Verdichtung der Faservorform (200) durch eine Matrix umfasst, um ein Teil zu bilden, das die Form der Plattform (100) aufweist, die hergestellt werden soll,
wobei die Faservorform (200) der Plattform (100) einen Basisabschnitt (210) umfasst, der dazu bestimmt ist, die Faserverstärkung der Basis (110) der Plattform (100) zu bilden, wobei der Basisabschnitt (210) der Faservorform (200) einen Zentralteil-Abschnitt (220) und zwei Opferkanten-Abschnitte (231, 232) umfasst, deren Dicke geringer ist als jene des Zentralteil-Abschnitts (220), wobei die Kettfäden, die zu dem Zentralteil-Abschnitt (220) gehören, mit einer ersten Vielzahl von Schussfäden und mit einer zweiten Vielzahl von Schussfäden verwebt sind,
wobei das Verfahren **dadurch gekennzeichnet ist, dass** die erste Vielzahl von Schussfäden zwischen dem Zentralteil-Abschnitt (220) und den Opferkanten-Abschnitten (231, 232) durchgängig ist, wobei die Opferkanten-Abschnitte (231, 232) eine erste Vielzahl von Kettfäden umfasst, die mit der ersten Vielzahl von Schussfäden verwebt ist,
wobei die Differenz in der Dicke zwischen den Opferkanten-Abschnitten (231, 232) und dem Zentralteil-Abschnitt (220) durch Entfernen einer zweiten Vielzahl von Kettfäden verwirklicht wird, die sich außerhalb des Zentralteil-Abschnitts (220) befindet und nicht mit Schussfäden der mehreren Schichten von Schussfäden verwebt ist, wobei die zweite Vielzahl von Kettfäden nicht mit der ersten Vielzahl von Schussfäden verwebt ist und nicht mit der zweiten Vielzahl von Schussfäden verwebt ist, und dass die zwei Abschnitte von Fäden, die zu der zweiten Vielzahl von Schussfäden gehören und nicht mit dem Zentralteil-Abschnitt (220) verwebt sind, abgeschnitten werden, wenn das Weben der Faservorform (200) abgeschlossen ist.

2. Herstellungsverfahren nach Anspruch 1, wobei die Verdichtung der Faservorform (200) dadurch verwirklicht wird, dass die Faservorform (200) in der Imprägnierkammer (71) einer Form (70) angeordnet wird, die eine Unterseite umfasst, indem die Oberfläche (221) der Faservorform (200), die dazu bestimmt ist, die erste Oberfläche (121) des zentralen Teils (120) der Basis (110) der Plattform (100) zu bilden, auf der Unterseite aufgelegt wird, wobei die Imprägnierkammer (71) durch eine flexible Membran (73) verschlossen ist, welche die Imprägnierkammer (71) von einer Verdichtungskammer (72) trennt, wobei ein Imprägnierfluid (8) in die Imprägnierkammer (71) eingespritzt wird und ein Verdichtungsfluid (9) in die Verdichtungskammer (72) eingespritzt wird, so dass ein Druck (Q) auf die Membran (73) ausgeübt wird.

3. Verfahren nach Anspruch 2, wobei die Einspritzung des Imprägnierfluids (8) vor der Einspritzung des Verdichtungsfluids (9) beginnt.

4. Verfahren nach Anspruch 2, wobei die Einspritzung des Verdichtungsfluids (9) vor der Einspritzung des Imprägnierfluids (8) beginnt.

## Claims

1. A method for manufacturing an inter-blade platform (100) of a turbomachine fan (1), said platform (100) including a base (110) and at least two tabs (150), the base (110) comprising a central part (120) comprising a first surface (121) configured to delimit a flow stream of the fan and a second surface (122), opposite to the first surface (121), from which said at least two tabs (150) extend radially, the base (110) also comprising a first and a second sacrificial lateral edge (131, 132) extending on either side of the central part (120) of the base (110) and having a thickness smaller than that of the central part (120) of the base (110),
the method comprising the production of a fibrous preform (200) of the platform (100) by three-dimensional weaving in a single part between a plurality of weft yarn layers and a plurality of warp yarn layers,
the method also comprising the densification of the fibrous preform (200) by a matrix to form a part having the shape of the platform (100) to be manufactured,
the fibrous preform (200) of the platform (100) comprising a base portion (210) intended to form the fibrous reinforcement of the base (110) of the platform (100), said base portion (210) of the fibrous preform (200) comprising a central part portion (220) and two sacrificial edge portions (231, 232), the thickness of which is less than that of the central part portion (220), the warp yarns belonging to the central part portion (220) being woven with a first plurality of weft yarns and with a second plurality of weft yarns,
the method being **characterized in that** the first plurality of weft yarns is continuous between the central part portion (220) and the sacrificial edge portions (231, 232), the sacrificial edge portions (231, 232) comprising a first plurality of warp yarns woven to the first plurality of weft yarns,
the difference in thickness between the lateral edge portions (231, 232) and the central part portion (220) being achieved by withdrawing a second plurality of warp yarns located outside the central part portion (220) and not being woven with the weft yarns of the plurality of weft yarn layers, the second plurality of warp yarns not being woven with the first plurality of weft yarns and not being woven with the second plurality of weft yarns, and **in that** the two yarn portions belonging to the second plurality of weft yarns not being woven with the central part portion (220) are cut out when the weaving of the fibrous preform (200) is completed.

2. The manufacturing method according to claim 1, wherein the densification of the fibrous preform (200) is accomplished by arranging the fibrous preform (200) in the impregnation chamber (71) of a mold (70) comprising a lower face, by having the surface (221) of the fibrous preform (200) intended to form the first surface of the central part (120) of the base (110) of the platform (100) rest on said lower surface (221) of the fibrous preform (200), the impregnation chamber (71) being closed by a flexible membrane (73) separating said impregnation chamber (71) from a compaction chamber (72), an impregnation fluid (8) being injected into the impregnation chamber (71) and a compression fluid (9) being injected into the compaction chamber (72) so as to apply pressure (Q) on the membrane (73).

3. The method according to claim 2, wherein the injection of the impregnation fluid (8) begins before the injection of the compression fluid (9).

4. The method according to claim 2, wherein the injection of the compression fluid (9) begins before the injection of the impregnation fluid (8).
